# EUROPEAN PATENT APPLICATION

(11) **EP 3 509 227 A1**
(43) Date of publication of application: **10.07.2019**
(21) Application number: 16916506.5
(22) Date of filing: 22.09.2016
(51) Int. Cl.: H04B 7/06, H04B 7/08

(54) **MEASUREMENT CONFIGURATION METHOD AND DEVICE**

(71) Applicant: Huawei Technologies Co., Ltd., Longgang District Shenzhen, Guangdong 518129 (CN)
(72) Inventor: ZHANG, Lili, Shenzhen Guangdong 518129 (CN); ZHUANG, Hongcheng, Shenzhen Guangdong 518129 (CN)
(74) Representative: Pfenning, Meinig & Partner mbB
(86) International application number: PCT/CN2016/099764
(87) International publication number: WO 2018/053767

(57) **Abstract**

Embodiments of the present invention provide a measurement configuration method and apparatus. A first network device determines measurement configuration information of a first beam and/or a second beam and sends the measurement configuration information of the first beam and/or the second beam to first UE, and the first UE measures a first reference signal and/or a second reference signal based on the measurement configuration information, thereby reducing overheads.

## Description

### TECHNICAL FIELD

Embodiments of the present invention relate to communications technologies, and in particular, to a measurement configuration method and apparatus.

### BACKGROUND

In a millimetric wave system, a millimetric wave is very easily obstructed by a moving object between a transmit node and user equipment or on a communication link between a base station and user equipment. To resolve this problem, an ultra dense network is deployed. To be specific, a sufficiently large quantity of transmit nodes or base stations are used, and user equipment can space division multiplex the plurality of transmit nodes or base stations at a same moment, where each transmit node or base station includes one or more beams. In this way, when a user turns or an orientation of a mobile phone changes, a serving beam is changed or switched to ensure communication quality of the millimetric wave.

To change or switch the serving beam, the user equipment needs to learn of quality of a channel between the user equipment and each beam. The user equipment learns of, by detecting information such as signal strength of a reference signal of each beam, channel quality corresponding to the beam. Before detecting the reference signal of each beam, the user equipment needs to learn of measurement configuration information of the beam, to detect the reference signal of the beam based on the measurement configuration information. In the prior art, the user equipment obtains the measurement configuration information of each beam through blind detection.

However, in the method of the prior art, a user obtains measurement configuration information of each beam through blind detection, resulting in relatively high overheads.

### SUMMARY

Embodiments of the present invention provide a measurement configuration method and apparatus, to reduce overheads.

According to a first aspect, an embodiment of the present invention provides a measurement configuration method, including:
determining, by a first network device, measurement configuration information of a first beam and/or a second beam; and sending the measurement configuration information of the first beam and/or the second beam to first UE, where the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, the beam identifier is a beam pair identifier, and the beam pair includes a transmit beam identifier of the network device and a receive beam identifier of the user equipment.

In a possible design, before the determining, by a first network device, measurement configuration information of a first beam and/or a second beam, the method further includes:
receiving, by the first network device, first information sent by the first UE, where the first information includes at least one of the following: indication information of a service type of the first UE, indication information of a detection type, and indication information of a UE capability; and
the determining, by a first network device, measurement configuration information of a first beam and/or a second beam includes:
   determining, by the first network device, the measurement configuration information of the first beam and/or the second beam based on the first information.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more small cells or TRPs.

The cell identifier may be a physical cell identifier, a virtual cell identifier, or a combination of a virtual cell identifier and a relative identifier of the TRP in the virtual cell.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device and/or a network device adjacent to the first network device.

In a possible design, the second beam is one or more beams that are selected by the first network device based on the first information and that belong to the first network device and/or a network device adjacent to the first network device.

In a possible design, the determining, by a first network device, measurement configuration information of a first beam and/or a second beam based on the first information includes:
sending, by the first network device, the first information to a second network device; and
receiving, by the first network device, the measurement configuration information that is of the second beam belonging to the second network device and that is sent by the second network device.

In a possible design, the method further includes:
determining, by the first network device based on the first information, the measurement configuration information of the first beam and the second beam that belongs to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the method further includes: sending measurement trigger information to the first UE, where the measurement trigger information is used to trigger measurement of the first reference signal of the first beam based on the measurement configuration information of the first beam and/or measurement of the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the sending, by the first network device, the measurement configuration information of the first beam and/or the second beam to first UE includes:
scrambling, by the first network device, the measurement configuration information or activation information of the measurement configuration information by using a first RNTI; and
sending, by the first network device, the scrambled measurement configuration information or the scrambled activation information of the measurement configuration information.

In a possible design, the first RNTI is a measurement configuration detection or measurement configuration activation RNTI of the reference signal.

In a possible design, the first RNTI is used to scramble the measurement configuration information or the activation information of the measurement configuration information for a group of UEs having common information.

In a possible design, the method further includes:
receiving, by the first network device, second information sent by at least one second UE, where the second information includes: indication information of a service type of the second UE, indication information of a detection type, and/or indication information of a UE capability; and
determining, by the first network device based on the second information and the first information, that the second UE and the first UE have common information; and
the sending, by the first network device, the scrambled measurement configuration information includes:
   sending, by the first network device to the first UE and the second UE, the measurement configuration information or the activation information of the measurement configuration information that is scrambled by using the first RNTI.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

According to a second aspect, an embodiment of the present invention provides a measurement configuration method, including:
determining, by a second network device, measurement configuration information of a second beam; and
sending, by the second network device, the measurement configuration information of the second beam to a first network device, where
the measurement configuration information of the second beam is measurement configuration information of a second reference signal sent in the second beam; and
the measurement configuration information includes at least one of the following:
   a time domain resource occupied by the second reference signal, where the time domain resource is an orthogonal frequency division multiplexing OFDM symbol quantity, a mini-subframe quantity, a subframe quantity, or a timeslot quantity;
   sending duration or a sending window of the second reference signal;
   a sending period of the second reference signal;
   a distribution density or a distribution mode of the second reference signal;
   a frequency domain offset of the second reference signal;
   a beam identifier corresponding to a first beam and/or the second beam; and
   a sequence identifier of the reference signal.

In a possible design, the method further includes:
receiving, by the second network device, first information sent by the first network device, where the first information includes at least one of the following:
   indication information of a service type of the first UE;
   indication information of a detection type; and
   indication information of a UE capability; and
the determining, by a second network device, measurement configuration information of a second beam includes:
   determining, by the second network device, the measurement configuration information of the second beam based on the first information.

According to a third aspect, an embodiment of the present invention provides a measurement configuration method, including:
receiving, by first user equipment UE, measurement configuration information of a first beam and/or a second beam that is sent by a first network device; and
measuring, by the first UE, a first reference signal and/or a second reference signal based on the measurement configuration information, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, before the receiving, by first user equipment UE, measurement configuration information of a first beam and/or a second beam that is sent by a first network device, the method further includes:
sending, by the first UE, first information to the first network device, where the first information includes at least one of the following:
indication information of a service type of the first UE;
indication information of a detection type; and
indication information of a UE capability.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device or a network device adjacent to the first network device.

In a possible design, the second beam is one or more beams that are selected by the first network device based on the first information and that belong to the first network device or a network device adjacent to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the method further includes:
receiving, by the first UE, measurement trigger information sent by the first network device; and
the measuring, by the first UE, a first reference signal and/or a second reference signal based on the measurement configuration information includes:
   under trigger of the measurement trigger information, measuring, by the first UE, the first reference signal of the first beam based on the measurement configuration information of the first beam; or measuring the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the method further includes:
receiving, by the first UE, a first RNTI sent by the first network device; and
the receiving, by first user equipment UE, measurement configuration information of a first beam and/or a second beam or activation information of measurement configuration information that is sent by a first network device includes:
   descrambling, by the first UE, the measurement configuration information of the first beam and/or the second beam or activation information of the measurement configuration information by using the first RNTI.

In a possible design, the first RNTI is a measurement configuration detection or activation RNTI of the reference signal.

In a possible design, the first RNTI is used to scramble the measurement configuration information or the activation information of the measurement configuration information for a group of UEs having common information.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

According to a fourth aspect, an embodiment of the present invention provides a measurement configuration apparatus, including:
a processing module, configured to determine measurement configuration information of a first beam and/or a second beam; and
a sending module, configured to send the measurement configuration information of the first beam and/or the second beam to first UE, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, the beam identifier is a beam pair identifier, and the beam pair includes a transmit beam identifier of the network device and a receive beam identifier of the user equipment.

In a possible design, the apparatus further includes:
a receiving module, configured to receive first information sent by the first UE, where the first information includes at least one of the following: indication information of a service type of the first UE, indication information of a detection type, and indication information of a UE capability; and
the processing module is specifically configured to determine the measurement configuration information of the first beam and/or the second beam based on the first information.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

In a possible design, the cell identifier is a physical cell identifier, a virtual cell identifier, or a combination of a virtual cell identifier and a relative identifier of the network device in the virtual cell.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device or a network device adjacent to the first network device.

In a possible design, the second beam is one or more beams that are selected by the first network device based on the first information and that belong to the first network device or a network device adjacent to the first network device.

In a possible design, the processing module is specifically configured to: control the sending module to send the first information to a second network device, and control the receiving module to receive the measurement configuration information that is of the second beam belonging to the second network device and that is sent by the second network device.

In a possible design, the processing module is further configured to determine, based on the first information, the measurement configuration information of the first beam and the second beam that belongs to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the sending module is further configured to send measurement trigger information to the first UE, where the measurement trigger information is used to trigger measurement of the first reference signal of the first beam based on the measurement configuration information of the first beam or measurement of the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the sending module is specifically configured to: scramble the measurement configuration information or activation information of the measurement configuration information by using a first RNTI, and send the scrambled measurement configuration information or the scrambled activation information of the measurement configuration information.

In a possible design, the first RNTI is a measurement configuration detection RNTI or a measurement configuration activation RNTI of the reference signal.

In a possible design, the first RNTI is used to scramble the measurement configuration information or the activation information of the measurement configuration information for a group of UEs having common information.

In a possible design, the receiving module is specifically configured to receive second information sent by at least one second UE, where the second information includes: indication information of a service type of the second UE, indication information of a detection type, and/or indication information of a UE capability;
the processing module is specifically configured to determine, based on the second information and the first information, that the second UE and the first UE have common information; and
the sending module is specifically configured to send, to the first UE and the second UE, the measurement configuration information or the activation information of the measurement configuration information that is scrambled by using the first RNTI.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

According to a fifth aspect, an embodiment of the present invention provides a measurement configuration apparatus, including:
a processing module, configured to determine measurement configuration information of a second beam; and
a sending module, configured to send the measurement configuration information of the second beam to a first network device, where
the measurement configuration information of the second beam is measurement configuration information of a second reference signal sent in the second beam; and
the measurement configuration information includes at least one of the following:
   a time domain resource occupied by the second reference signal, where the time domain resource is an orthogonal frequency division multiplexing OFDM symbol quantity, a mini-subframe quantity, a subframe quantity, or a timeslot quantity;
   sending duration or a sending window of the second reference signal;
   a sending period of the second reference signal;
   a distribution density or a distribution mode of the second reference signal;
   a frequency domain offset of the second reference signal;
   a beam identifier corresponding to a first beam and/or the second beam and/or a cell identifier corresponding to a network device; and
   a sequence identifier of the reference signal.

In a possible design, the apparatus further includes:
a receiving module, configured to receive first information sent by the first network device, where the first information includes at least one of the following:
   indication information of a service type of the first UE;
   indication information of a detection type; and
   indication information of a UE capability; and
the determining, by a second network device, measurement configuration information of a second beam includes:
   determining, by the second network device, the measurement configuration information of the second beam based on the first information.

According to a sixth aspect, an embodiment of the present invention provides a measurement configuration apparatus, including:
a receiving module, configured to receive measurement configuration information of a first beam and/or a second beam that is sent by a first network device; and
a processing module, configured to measure a first reference signal and/or a second reference signal based on the measurement configuration information, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, the beam identifier is a beam pair identifier, and the beam pair includes a transmit beam identifier of the network device and a receive beam identifier of the user equipment.

In a possible design, the apparatus further includes:
a sending module, configured to send first information to the first network device, where the first information includes at least one of the following:
indication information of a service type of the first UE;
indication information of a detection type; and
indication information of a UE capability.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

In a possible design, the cell identifier is a physical cell identifier, a virtual cell identifier, or a combination of a virtual cell identifier and a relative identifier of the network device in the virtual cell.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device or a network device adjacent to the first network device.

In a possible design, the second beam is one or more beams that are selected by the first network device based on the first information and that belong to the first network device or a network device adjacent to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the receiving module is further configured to receive measurement trigger information sent by the first network device; and
the processing module is specifically configured to: under trigger of the measurement trigger information, measure the first reference signal of the first beam based on the measurement configuration information of the first beam; or measure the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the receiving module is further configured to receive a first RNTI sent by the first network device; and
the receiving module is specifically configured to descramble the measurement configuration information of the first beam and/or the second beam or activation information of the measurement configuration information by using the first RNTI.

In a possible design, the first RNTI is a measurement configuration detection RNTI or a measurement configuration activation RNTI of the reference signal.

In a possible design, the first RNTI is used to scramble the measurement configuration information or the activation information of the measurement configuration information for a group of UEs having common information.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

According to a seventh aspect, an embodiment of the present invention provides a measurement configuration apparatus, including:
a processor, configured to determine measurement configuration information of a first beam and/or a second beam; and
a transmitter, configured to send the measurement configuration information of the first beam and/or the second beam to first UE, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, the beam identifier is a beam pair identifier, and the beam pair includes a transmit beam identifier of the network device and a receive beam identifier of the user equipment.

In a possible design, the apparatus further includes:
a receiver, configured to receive first information sent by the first UE, where the first information includes at least one of the following: indication information of a service type of the first UE, indication information of a detection type, and indication information of a UE capability; and
the processor is specifically configured to determine the measurement configuration information of the first beam and/or the second beam based on the first information.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

In a possible design, the cell identifier is a physical cell identifier, a virtual cell identifier, or a combination of a virtual cell identifier and a relative identifier of the network device in the virtual cell.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device or a network device adjacent to the first network device.

In a possible design, the second beam is one or more beams that are selected by the first network device based on the first information and that belong to the first network device or a network device adjacent to the first network device.

In a possible design, the processor is specifically configured to: control the transmitter to send the first information to a second network device, and control the receiver to receive the measurement configuration information that is of the second beam belonging to the second network device and that is sent by the second network device.

In a possible design, the processor is further configured to determine, based on the first information, the measurement configuration information of the first beam and the second beam that belongs to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the transmitter is further configured to send measurement trigger information to the first UE, where the measurement trigger information is used to trigger measurement of the first reference signal of the first beam based on the measurement configuration information of the first beam or measurement of the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the transmitter is specifically configured to: scramble the measurement configuration information or activation information of the measurement configuration information by using a first RNTI, and send the scrambled measurement configuration information or the scrambled activation information of the measurement configuration information.

In a possible design, the first RNTI is a measurement configuration detection RNTI or a measurement configuration activation RNTI of the reference signal.

In a possible design, the first RNTI is used to scramble the measurement configuration information or the activation information of the measurement configuration information for a group of UEs having common information.

In a possible design, the receiver is specifically configured to receive second information sent by at least one second UE, where the second information includes: indication information of a service type of the second UE, indication information of a detection type, and/or indication information of a UE capability;
the processor is specifically configured to determine, based on the second information and the first information, that the second UE and the first UE have common information; and
the transmitter is specifically configured to send, to the first UE and the second UE, the measurement configuration information or the activation information of the measurement configuration information that is scrambled by using the first RNTI.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

According to an eighth aspect, an embodiment of the present invention provides a measurement configuration apparatus, including:
a processor, configured to determine measurement configuration information of a second beam; and
a transmitter, configured to send the measurement configuration information of the second beam to a first network device, where
the measurement configuration information of the second beam is measurement configuration information of a second reference signal sent in the second beam; and
the measurement configuration information includes at least one of the following:
   a time domain resource occupied by the second reference signal, where the time domain resource is an orthogonal frequency division multiplexing OFDM symbol quantity, a mini-subframe quantity, a subframe quantity, or a timeslot quantity;
   sending duration or a sending window of the second reference signal;
   a sending period of the second reference signal;
   a distribution density or a distribution mode of the second reference signal;
   a frequency domain offset of the second reference signal;
   a beam identifier corresponding to a first beam and/or the second beam and/or a cell identifier corresponding to a network device; and
   a sequence identifier of the reference signal.

In a possible design, the apparatus further includes:
a receiver, configured to receive first information sent by the first network device, where the first information includes at least one of the following:
   indication information of a service type of the first UE;
   indication information of a detection type; and
   indication information of a UE capability; and
the determining, by a second network device, measurement configuration information of a second beam includes:
   determining, by the second network device, the measurement configuration information of the second beam based on the first information.

According to a ninth aspect, an embodiment of the present invention provides a measurement configuration apparatus, including:
a receiver, configured to receive measurement configuration information of a first beam and/or a second beam that is sent by a first network device; and
a processor, configured to measure a first reference signal and/or a second reference signal based on the measurement configuration information, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
   a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
   sending duration or a sending window of the reference signal;
   a sending period of the reference signal;
   a distribution density or a distribution mode of the reference signal;
   a frequency domain offset of the reference signal;
   a synchronous offset of a network device to which the first beam and/or the second beam belongs;
   a beam identifier corresponding to the first beam and/or the second beam and/or a cell identifier corresponding to a network device; and
   a sequence identifier of the reference signal.

In a possible design, the reference signal is a reference signal based on beamforming.

In a possible design, the beam identifier is a beam pair identifier, and the beam pair includes a transmit beam identifier of the network device and a receive beam identifier of the user equipment.

In a possible design, the apparatus further includes:
a transmitter, configured to send first information to the first network device, where the first information includes at least one of the following:
indication information of a service type of the first UE;
indication information of a detection type; and
indication information of a UE capability.

In a possible design, the first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

In a possible design, the cell identifier is a physical cell identifier, a virtual cell identifier, or a combination of a virtual cell identifier and a relative identifier of the network device in the virtual cell.

In a possible design, the second beam is an adjacent beam of the first beam;
the second beam is another beam of the network device to which the first beam belongs; or
the second beam is a beam of a network device adjacent to the network device to which the first beam belongs.

In a possible design, the reference signal is an aperiodic reference signal.

In a possible design, the second beam is one or more beams that are selected by the first network device and that belong to the first network device or a network device adjacent to the first network device.

In a possible design, the second beam is one or more beams that are selected by the first network device based on the first information and that belong to the first network device or a network device adjacent to the first network device.

In a possible design, the UE capability is used to indicate at least one of a beam quantity supported by the first UE, an angle covered by a beam of the first UE, a beam width of the first UE, and whether the first UE supports a plurality of links.

In a possible design, the indication information of the service type is a type identifier ID corresponding to the service type; and
the detection type indication is a destination ID corresponding to the detection type.

In a possible design, the indication information of the detection type is used to indicate that the detection type is radio resource management RRM measurement or channel state information CSI measurement.

In a possible design, a service type of the first UE is any one of the following:
a mobile broadband service xMBB;
a machine type communication service mMTC; and
an ultra-reliable and low latency service URLL.

In a possible design, the receiver is further configured to receive measurement trigger information sent by the first network device; and
the processor is specifically configured to: under trigger of the measurement trigger information, measure the first reference signal of the first beam based on the measurement configuration information of the first beam; or measure the second reference signal of the second beam based on the measurement configuration information of the second beam.

In a possible design, the measurement trigger information includes a first preset threshold; and
the first preset threshold is used to instruct: when signal strength of the first reference signal that is of the first beam and that is received by the first UE is less than the first preset threshold, to measure the second reference signal of the second beam.

In a possible design, the measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

In a possible design, the receiver is further configured to receive a first RNTI sent by the first network device; and
the receiver is specifically configured to descramble the measurement configuration information of the first beam and/or the second beam or activation information of the measurement configuration information by using the first RNTI.

In a possible design, the first RNTI is a measurement configuration detection RNTI or a measurement configuration activation RNTI of the reference signal.

In a possible design, the first RNTI is used to scramble the measurement configuration information or the activation information of the measurement configuration information for a group of UEs having common information.

In a possible design, the measurement configuration information is configured by using higher layer signaling, Media Access Control MAC signaling, or physical layer signaling, and configuring by using the physical layer signaling may be preconfiguring and activating a corresponding configuration feature by using a PDCCH command.

The embodiments of the present invention provide the measurement configuration method and apparatus. The first network device determines the measurement configuration information of the first beam and/or the second beam and sends the measurement configuration information of the first beam and/or the second beam to the first UE, and the first UE measures the first reference signal and/or the second reference signal based on the measurement configuration information. In this way, the first UE directly receives the measurement configuration information of the first beam and/or the second beam from the first network device, and the first UE does not need to determine the measurement configuration information through blind detection or the like, thereby reducing overheads. Further, the first UE sends the first information to the first network device, and the first network device determines the measurement configuration information of the first beam and/or the second beam based on the first information. Therefore, the determined measurement configuration information better matches a user requirement. In addition, a network device performs coordination on a network side based on a user requirement to obtain configuration information of the first network device and/or the second network device, thereby preventing a user from being interfered when the user receives a network device user, so that the user can perform measurement more accurately and effectively.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of a measurement configuration system according to an embodiment of the present invention;
FIG. 2 is a schematic flowchart of Embodiment 1 of a measurement configuration method according to the present invention;
FIG. 3 is a schematic flowchart of Embodiment 2 of a measurement configuration method according to the present invention;
FIG. 4 is a schematic flowchart of Embodiment 3 of a measurement configuration method according to the present invention;
FIG. 5 is a schematic diagram of a scenario according to an embodiment of the present invention;
FIG. 6 is a schematic flowchart of Embodiment 4 of a measurement configuration method according to the present invention;
FIG. 7 is a schematic structural diagram of Embodiment 1 of a measurement configuration apparatus according to the present invention;
FIG. 8 is a schematic structural diagram of Embodiment 2 of a measurement configuration apparatus according to the present invention;
FIG. 9 is a schematic structural diagram of Embodiment 3 of a measurement configuration apparatus according to the present invention;
FIG. 10 is a schematic structural diagram of Embodiment 4 of a measurement configuration apparatus according to the present invention;
FIG. 11 is a schematic structural diagram of Embodiment 5 of a measurement configuration apparatus according to the present invention; and
FIG. 12 is a schematic structural diagram of Embodiment 6 of a measurement configuration apparatus according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by person of ordinary skill in the art based on the embodiments of the present invention without creative efforts shall fall within the protection scope of the present invention.

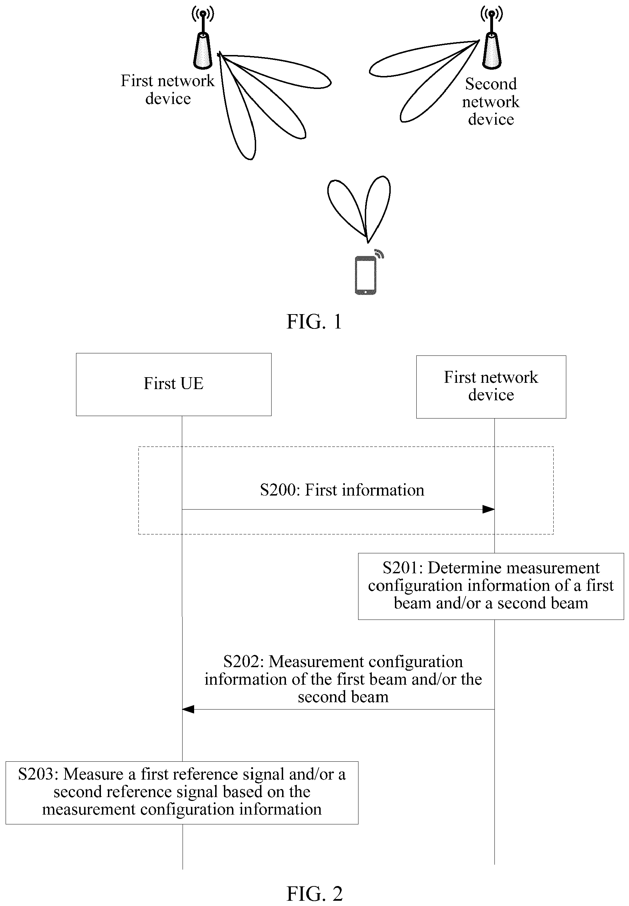

FIG. 1 is a schematic structural diagram of a measurement configuration system according to an embodiment of the present invention. As shown in FIG. 1, the measurement configuration system in this embodiment includes at least first user equipment (User Equipment, UE for short) and a first network device, and optionally may further include a second network device. The second network device is an adjacent network device of the first network device, and the first network device or the second network device may be a base station, a micro base station, an evolved base station, a transmission point (Transmission Point, TRP for short), or the like. This is not limited in the present invention. The first network device or the second network device includes one or more beams.

In this embodiment of the present invention, on a precondition that the first UE is in a connected mode, the first network device determines measurement configuration information of a first beam and/or a second beam and sends the measurement configuration information of the first beam and/or the second beam to the first UE. The first beam is a serving beam of the first UE, and the second beam is another beam of the first network device to which the first beam belongs and a beam of the second network device. Measurement configuration information of each beam is used by the first UE to measure a reference signal corresponding to the beam. Because the first UE directly receives the measurement configuration information of the first beam and/or the second beam from the first network device, the first UE does not need to determine the measurement configuration information through blind detection or the like, thereby reducing overheads.

In this embodiment of the present invention, the first network device further sends measurement trigger information to the first UE, where the measurement trigger information may include a preset threshold, so that the first UE compares the preset threshold with signal strength of a received reference signal of the first beam, to determine whether to measure a reference signal of the second beam.

In this embodiment of the present invention, the second UE having common information with the first UE is further determined, and measurement reference information of the first beam and/or the second beam that is scrambled by using a same particular radio network temporary identity (Radio Network Temporary Identity, RNTI for short) (referred to as a first RNTI) is sent to the first UE and the second UE, so that the first UE and the second UE descramble the measurement reference information of the first beam and/or the second beam by using the first RNTI, to determine the measurement reference information of the first beam and/or the second beam.

The following describes technical solutions of the present invention in detail with reference to specific embodiments. The following specific embodiments may be mutually combined, and same or similar concepts or processes may not be repeatedly described in some embodiments.

FIG. 2 is a schematic flowchart of Embodiment 1 of a measurement configuration method according to the present invention. As shown in FIG. 2, the method in this embodiment is as follows:
S201: A first network device determines measurement configuration information of a first beam and/or a second beam.

The first network device is a first base station, a first TRP, a base station to which a first cell belongs, or a transmission point TRP to which a first cell belongs, where the first cell is a physical cell or a virtual cell, and the virtual cell may include one or more TRPs.

The first beam is a serving beam of first UE.

The second beam is one or more beams that are selected by the first network device and that belong to the first network device or a network device adjacent to the first network device. To be specific, the second beam is an adjacent beam of the first beam; or the second beam is another beam of a network device to which the first beam belongs; or the second beam is a beam of an adjacent network device of a network device to which the first beam belongs.

Optionally, the first network device may select the second beam based on first information, where the first information includes at least one of the following: indication information of a service type of the first UE, indication information of a detection type, and indication information of a UE capability.

The measurement configuration information of the first beam is measurement configuration information of a first reference signal sent in the first beam, and the measurement configuration information of the second beam is measurement configuration information of a second reference signal sent in the second beam.

The measurement configuration information includes at least one of the following:
a time domain resource occupied by a reference signal, where the time domain resource is an orthogonal frequency division multiplexing (Orthogonal Frequency Division Multiplexing, OFDM for short) symbol quantity, a mini-subframe quantity, a subframe quantity, or a timeslot quantity, the reference signal is the first reference signal and/or the second reference signal, to satisfy a low latency requirement, a quantity of OFDMs into which a beam-specific reference signal (beam-specific reference signal, BRS for short) or a mobility-specific reference signal (mobility-specific reference signal, MRS for short) is compressed needs to be used.
sending duration or a sending window of the reference signal;
a sending period of a reference signal, where the period is shorter than that of a periodic BRS;
a distribution density or a distribution mode of a reference signal, where to satisfy a low-latency requirement, an entire channel feature needs to be extracted from OFDM duration into which a BRS is compressed, to improve a density used for BRS configuration;
a frequency domain offset of a reference signal, where when receive beams are the same, time and frequency domains and the like need to be coordinated, and it is required that a frequency domain offset is used for coordinated configuration of a neighboring beam or a network device;
a synchronous offset of a network device to which the first beam and/or the second beam belongs, where because different beams or TRPs may be asynchronous, a synchronous offset is required;
a beam identifier corresponding to the first beam and/or the second beam and/or a cell identifier corresponding to a network device to which the first beam and/or the second beam belongs, where the cell identifier is a physical cell identifier, a virtual cell identifier, or a combination of a virtual cell identifier and a relative identifier of a TRP in the virtual cell, where
the beam identifier may further be a beam pair identifier, that is, a transmit beam identifier of the network device and a receive beam identifier of user equipment; and
a sequence identifier of the reference signal.

Optionally, the reference signal is an aperiodic reference signal.

Optionally, the reference signal is a reference signal based on beamforming.

S202: The first network device sends the measurement configuration information of the first beam and/or the second beam to first UE.

Optionally, the measurement configuration information may be configured by using higher layer signaling, Media Access Control (Media Access Control, MAC for short) signaling, or physical layer signaling, and configuring by using the physical layer signaling may be preconfiguring and activating a corresponding configuration feature by using a PDCCH command.

The measurement configuration information of the first beam and/or the second beam may be sent to the first UE by using a physical downlink control channel (Physical Downlink Control Channel, PDCCH for short) whose format is redefined or particular content of a physical downlink shared channel (Physical Downlink Shared Channel, PDSCH for short).

When the measurement configuration information is sent by using the PDCCH whose format is redefined, a PDCCH command is preconfigured and is used for activation/deactivation; or a bit or DCI (downlink control information) on the PDCCH is re-explained.

When the measurement configuration information is sent by using the particular content of the PDSCH, the particular content includes: beamed reference signal receiving power (beamed reference signal receiving power, BRSRP for short)/beamed reference signal receiving quality (beamed reference signal receiving quality, BRSRQ for short)/a beamed received signal strength indication (Beamed Received signal strength indication, BRSSI for short)/a beamed received channel power indication (Beamed Received channel power indication, BRCPI for short).

The measurement configuration information of the first beam and/or the second beam that is sent to the first UE may further additionally indicate that a measurement result is sent by using a particular feedback resource. An example is as follows:

The particular feedback resource is in a specified cell or beam, and is time domain and frequency domain resources in a particular cell beam. Therefore, a measurement result may be fed back on a corresponding resource.

S203: The first UE measures a first reference signal and/or a second reference signal based on the measurement configuration information.

Optionally, before S201, the method further includes:
S200: The first network device receives first information sent by the first UE.

The first information includes at least one of the following: indication information of a service type of the first UE, indication information of a detection type, and indication information of a UE capability.

A service type of the first UE is any one of the following:
a mobile broadband service (Mobile Broadband, or enhanced mobile broadband, xMBB for short);
a massive low-power-consumption connection or machine type communication service (massive machine type communication, mMTC for short); and
an ultra-reliable and low latency service (Ultra Reliable Low Latency, URLL for short).

The indication information of the detection type is used to indicate that the detection type is radio resource management (Radio Resource Management, RRM for short) measurement or channel state information (Channel State Information, CSI for short) measurement.

The UE capability is used to indicate a beam quantity supported by the first UE, an angle covered by a beam of the first UE, a beam width of the first UE, and/or whether the first UE supports a plurality of links. The angle or the width may be an absolute value within a circumference or a relative value relative to a reference point. Beams included by the second beam and devices included by the second network device depend on the UE capability. A beam used by UE to feed back received signal strength and the received signal strength that is fed back may be used to determine an approximate location of the UE. Therefore, beams included by the second beam or devices and beams included by the second network device and the second beam are deduced.

Optionally, in a possible implementation, the indication information of the service type is a type identifier ID corresponding to the service type, and the indication information of the detection type is a destination ID corresponding to the detection type.

Table 1 is as follows:

**Table 1**

| Service type | Type ID | Detection type | Destination ID |
|---|---|---|---|
| xMBB | 00 | RRM | 0 |
| mMTC | 01 | CSI | 1 |
| URLL | 10 | | |
| Other | ... | | |

The indication information of a UE capability includes a beam quantity supported by the first UE, an angle covered by a beam of the first UE, a beam width of the first UE, and/or whether the first UE supports a plurality of links.

Correspondingly, S201 is specifically: determining, by the first network device, the measurement configuration information of the first beam and/or the second beam based on the first information.

For example, when a service type is URLL, an ultra-low latency is a main objective. Therefore, an OFDM symbol quantity obtained after compression in time domain may be used to obtain entire reference signal (reference signal, RS for short) information. When a service type is mMTC, requirements on bandwidth and a quantity of a plurality of links are not high, but a requirement on a battery service life is relatively high. Because MTC uses a short data packet and is used for non-urgent quality of service (Quality of Service, QoS for short), when the second beam is determined, fewer network devices or beams are required. When a service type is xMBB, because a requirement on bandwidth is higher, more network devices or beams are required.

For different services, quantities of surrounding beams that need to be activated are different. For example, for an MBB service, a relatively large quantity of beams need to be activated for BRS transmission, for example, beams 1, 5, 7, and 8. However, for an MTC service, a relatively small quantity of beams need to be activated for BRS transmission, for example, the beam 1. For URLL, an intermediate value may be used, for example, the beams 1 and 5. For an MBB service, a quantity of OFDM symbols occupied by a reference signal may be a normal subframe (normal subframe), for example, 1 subframe. However, for an URLL service, a relatively small quantity of OFDM symbols are required for corresponding detection, for example, there may be one or more OFDM symbols. Distribution densities of reference signals are also different, different indexes may be defined to correspond to different densities. For example, sparse (sparse) corresponds to 0 and dense (dense) corresponds to 1. Therefore, an index is used to indicate a density degree. For a frequency domain offset (offset), different services may correspond to X3, Y3, and Z3, and the value ranges fall within an entire frequency range. An offset is based on a quantity of physical resource blocks (Physical Resource Block, PRB for short), a quantity of resource elements (Resource element, RE for short), or any new resource granularity defined in a 5G system. A synchronous offset may be based on an absolute value in time domain, a subframe, a timeslot, an OFDM symbol, or any new resource granularity (which may be, for example, a mini-subframe, a mini-slot, or one or more OFDM symbol lengths) defined in a 5G system. A power offset may be an absolute value or a relative value obtained after original power is adjusted.

In this embodiment, the first network device determines the measurement configuration information of the first beam and/or the second beam and sends the measurement configuration information of the first beam and/or the second beam to the first UE, and the first UE measures the first reference signal and/or the second reference signal based on the measurement configuration information. In this way, the first UE directly receives the measurement configuration information of the first beam and/or the second beam from the first network device, and the first UE does not need to determine the measurement configuration information through blind detection or the like, thereby reducing overheads. Further, the first UE sends the first information to the first network device, and the first network device determines the measurement configuration information of the first beam and/or the second beam based on the first information. Therefore, the determined measurement configuration information matches a user requirement. In addition, a network device performs coordination to obtain configuration information of the first network device and/or the second network device on a network side based on a user requirement, thereby preventing a user from being interfered when the user receives a network device user, so that the user can perform measurement more accurately and effectively.

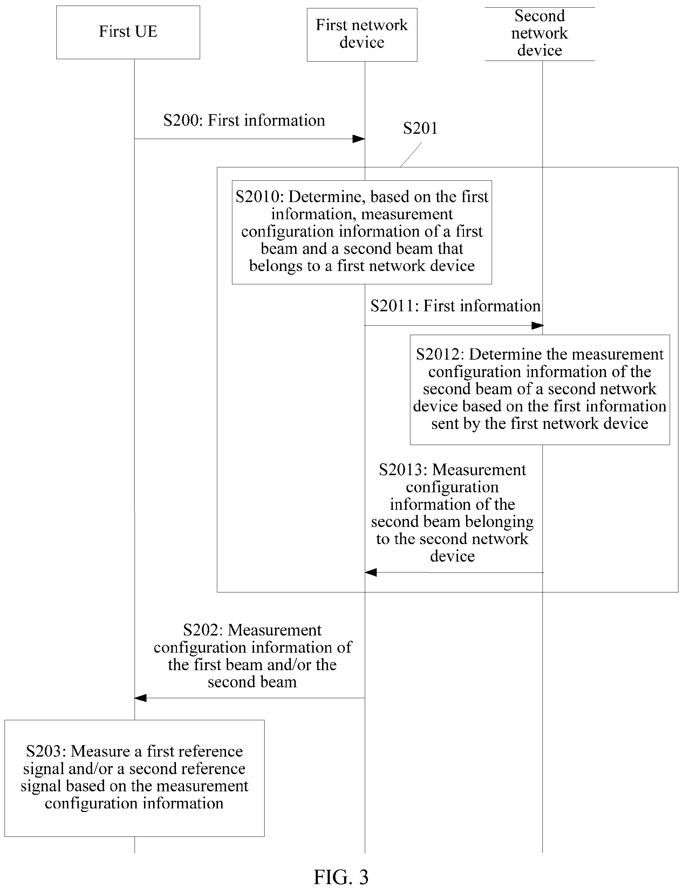

FIG. 3 is a schematic flowchart of Embodiment 2 of a measurement configuration method according to the present invention. As shown in FIG. 3, FIG. 3 describes a possible implementation of S201 in the embodiment shown in FIG. 2.

When the first network device needs to determine the measurement configuration information of the second beam belonging to the second network device, the following possible implementation may be used:
S2011: The first network device sends first information to a second network device.

After the first network device receives the first information, the second network device is determined based on a UE capability in the first information, and the first information is sent to the second network device, so that the second network device learns of the first information of the first UE.

Optionally, the first information may be notified or exchanged by using air interface signaling or interface signaling between the first network device and the second network device.

S2012: The second network device determines the measurement configuration information of the second beam of the second network device based on the first information sent by the first network device.

S2013: The first network device receives the measurement configuration information that is of the second beam belonging to the second network device and that is sent by the second network device.

When the first network device needs to determine the measurement configuration information of the first beam and the second beam belonging to the first network device, the following possible implementation may be used:
S2010: The first network device determines, based on the first information, the measurement configuration information of the first beam and the second beam that belongs to the first network device.

When the first network device needs to determine the measurement configuration information of the first beam and the second beam that belongs to the first network device, the measurement configuration information of the second beam belonging to the second network device also needs to be determined, and a determining sequence is not limited. To be specific, S2010 and S2011 to S2013 may be simultaneously performed; S2010 may be performed first and S2011 to S2013 are then performed; or S2011-S2013 may be performed first and S2010 is then performed. This is not limited in the present invention.

In this embodiment, the first network device sends the first information to the second network device, so that the second network device learns of a related status of the first UE based on the first information, determines the measurement configuration information of the second beam of the second network device based on the first information, and sends the measurement configuration information of the second beam of the second network device to the first network device, so that the first network device sends the measurement configuration information of the second beam of the second network device to the first UE. Therefore, the first UE does not need to determine the measurement configuration information of the first beam and/or the second beam one by one through blind detection, thereby reducing overheads. In addition, because the measurement configuration information of the first beam and/or the second beam is determined based on the first information, the determined measurement configuration information is more accurate.

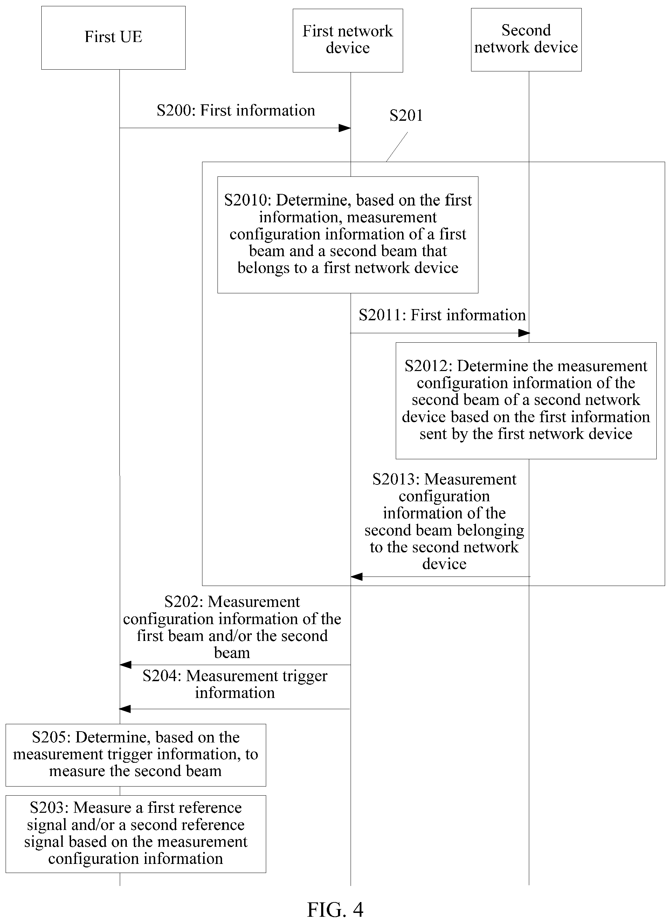

FIG. 4 is a schematic flowchart of Embodiment 3 of a measurement configuration method according to the present invention. FIG. 4 is based on Embodiment 2 or Embodiment 3. Further, before S203, the method further includes:
S204: The first network device sends measurement trigger information to the first UE.

A threshold for determining whether to measure the second beam may be sent to the first UE by using particular content of a PDSCH. For details of the particular content of the PDSCH, refer to detailed descriptions of S202.

The measurement trigger information is used to trigger measurement of the second reference signal of the second beam based on the measurement configuration information of the second beam or measurement of the first reference signal of the first beam based on the measurement configuration information of the first beam.

Optionally, the measurement trigger information includes a first preset threshold. The first preset threshold is used to instruct, when signal strength of the first reference signal that is of the first beam and that is received by the first UE is less than the first preset threshold, to measure the second reference signal of the second beam, where the second beam includes a second beam belonging to the first network device and a second beam belonging to the second network device.

Optionally, the measurement trigger information further includes a second preset threshold, where the second preset threshold is greater than the first preset threshold. The second preset threshold is used to instruct, when signal strength of the first reference signal that is of the first beam and that is received by the first UE is less than the second preset threshold, to measure the second reference signal of the second beam belonging to a same network device as the first beam. To be specific, the reference signal of the second beam of the first network device is measured, to switch to the second beam of the first network device based on a measurement result, so that the second beam after changing or switching is used as a serving beam of the first UE.

For different service types, the preset threshold may be set differently. For example, for URLL, the second threshold may be a larger value to help faster activation and more reliable connection, and when signal strength of a serving beam is less than the second preset threshold, a reference signal of another second beam starts to be measured. For an xMBB service, the first preset threshold may be a smaller value, to reduce unnecessary measurement and beam switching, thereby reducing overheads.

S205: The first UE determines, based on the measurement trigger information, to measure the second beam.

In this embodiment, the first network device sends the measurement trigger information to the first UE, so that the first UE measures the second beam based on the measurement trigger information, thereby reducing measurement overheads.

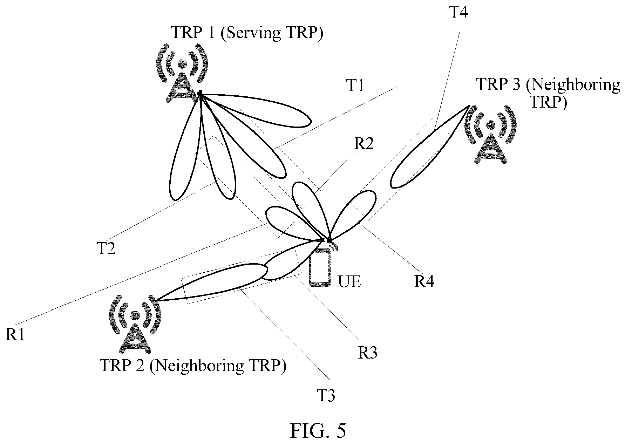

As shown in FIG. 5, FIG. 5 is a schematic diagram of a scenario according to an embodiment of the present invention. For example, a TPR1 suggests that a beam 3 of a TRP2 and a beam 4 of a TRP3 are used to send a BRS, and a beam used to send a BRS after coordination needs to be exchanged by using an inter-TRP interface and is sent to UE by using air interface signaling.

Measurement trigger information within one cell may be different from measurement trigger information within another cell, to reduce unnecessary detection.

For example, when UE is in a connected mode in a transmit beam T1 of the TRP1 by using a receive beam R2, the UE may be activated to detect a transmit beam T2 of the TRP1 by using a receive beam R1.

A detection threshold may be a threshold 1 and is used to establish connectivity within a TRP (that is, when signal strength of a current serving beam is less than the threshold 1, a notified surrounding beam for transmitting a BRS is detected).

The UE may be alternatively activated to detect a transmit beam T3 of the TRP2 by using a receive beam R3.

The detection threshold may be a threshold 2 and is used to establish connectivity between TRPs.

In addition, the UE may be alternatively activated to detect a transmit beam T4 of the TRP3 by using a receive beam R4.

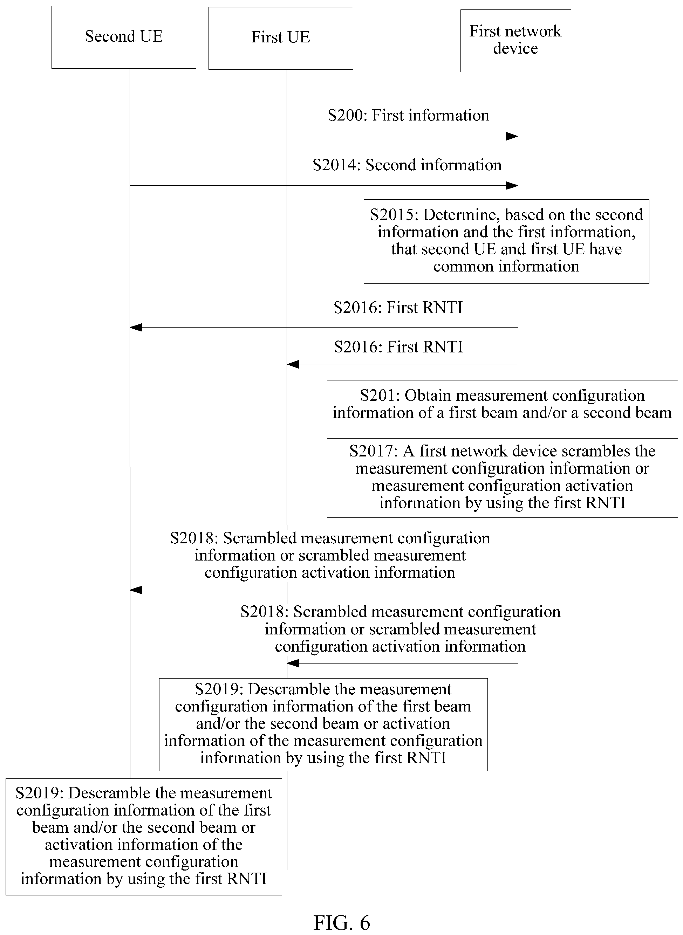

FIG. 6 is a schematic flowchart of Embodiment 4 of a measurement configuration method according to the present invention. FIG. 6 is based on any one of Embodiment 2 to Embodiment 4, and the measurement configuration information is sent to a group of UEs. The group of UEs have common information, and the measurement configuration information is scrambled by using a first RNTI, so that the group of UEs descramble the measurement configuration information by using the first RNTI. A possible implementation is as follows:
S2014: The first network device receives second information sent by at least one second UE.

The second information includes: indication information of a service type of the second UE, indication information of a detection type, and/or indication information of a UE capability.

For the indication information of the service type, the indication information of the detection type, and/or the indication information of the UE capability, refer to detailed descriptions in S200, and details are not described herein again.

S2015: The first network device determines, based on the second information and the first information, that the second UE and the first UE have common information.

Having common information means that service types, detection types, and UE capabilities are all the same.

S2016: The first network device sends the first RNTI to the first UE and the second UE.

The first RNTI is a measurement configuration detection RNTI or a measurement configuration activation RNTI of the reference signal.

The first RNTI is used to scramble the measurement configuration information or the measurement configuration activation information for a group of UEs having common information.

S2017: The first network device scrambles the measurement configuration information or measurement configuration activation information by using the first RNTI.

S2018: The first network device sends the scrambled measurement configuration information or the scrambled measurement configuration activation information.

S2019: The first UE and the second UE descramble the measurement configuration information of the first beam and/or the second beam or activation information of the measurement configuration information by using the first RNTI.

In this embodiment, the second UE having common information with the first UE is determined based on the second information sent by the second UE and the first information sent by the first UE, the first UE and the second UE having common information are used as a group of UEs, and the common first RNTI is sent to the group of UEs, so that the group of UEs descramble the measurement configuration information of the first beam and/or the second beam based on the first RNTI, thereby further reducing overheads.

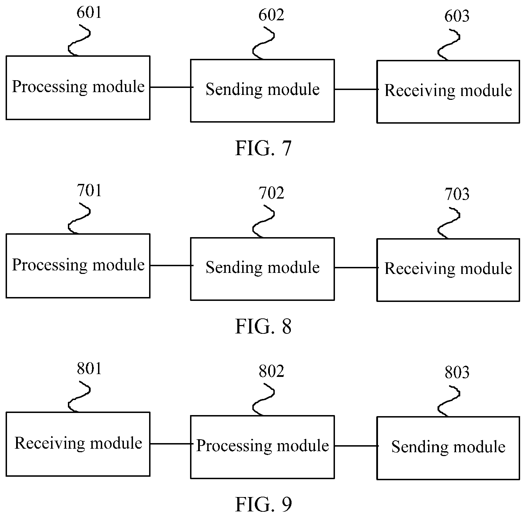

FIG. 7 is a schematic structural diagram of Embodiment 1 of a measurement configuration apparatus according to the present invention. The apparatus in this embodiment is deployed in a first network device, and the apparatus includes a processing module 601 and a sending module 602, where
the processing module 601 is configured to determine measurement configuration information of a first beam and/or a second beam; and
the sending module 602 is configured to send the measurement configuration information of the first beam and/or the second beam to first UE, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

The reference signal is a reference signal based on beamforming.

The beam identifier is a beam pair identifier, and the beam pair includes a transmit beam identifier of the network device and a receive beam identifier of the user equipment.

Further, the apparatus further includes:
a receiving module 603, configured to receive first information sent by the first UE, where the first information includes at least one of the following: indication information of a service type of the first UE, indication information of a detection type, and indication information of a UE capability; and
the processing module 601 is specifically configured to determine the measurement configuration information of the first beam and/or the second beam based on the first information.

The first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

The cell identifier is a physical cell identifier, a virtual cell identifier, or a combination of a virtual cell identifier and a relative identifier of the network device in the virtual cell.

The second beam is an adjacent beam of the first beam;
the second beam is another beam of the network device to which the first beam belongs; or
the second beam is a beam of a network device adjacent to the network device to which the first beam belongs.

The reference signal is an aperiodic reference signal.

The second beam is one or more beams that are selected by the first network device and that belong to the first network device or a network device adjacent to the first network device.

The second beam is one or more beams that are selected by the first network device based on the first information and that belong to the first network device or a network device adjacent to the first network device.

The UE capability is used to indicate at least one of a beam quantity supported by the first UE, an angle covered by a beam of the first UE, a beam width of the first UE, and whether the first UE supports a plurality of links.

The indication information of the service type is a type identifier ID corresponding to the service type; and
the detection type indication is a destination ID corresponding to the detection type.

The indication information of the detection type is used to indicate that the detection type is radio resource management RRM measurement or channel state information CSI measurement.

A service type of the first UE is any one of the following:
a mobile broadband service xMBB;
a machine type communication service mMTC; and
an ultra-reliable and low latency service URLL.

The apparatus in this embodiment may be configured to correspondingly perform the technical solution of the method embodiment shown in FIG. 2, their implementation principles and technical effects are similar, and details are not described herein again.

In FIG. 7, the processing module 601 is specifically configured to: control the sending module to send the first information to a second network device, and control the receiving module to receive the measurement configuration information that is of the second beam belonging to the second network device and that is sent by the second network device.

The processing module 601 is further configured to determine, based on the first information, the measurement configuration information of the first beam and the second beam that belongs to the first network device.

The apparatus in this embodiment may be configured to correspondingly perform the technical solution of the method embodiment shown in FIG. 3, their implementation principles and technical effects are similar, and details are not described herein again.

In FIG. 7, the sending module 602 is further configured to send measurement trigger information to the first UE, where the measurement trigger information is used to trigger measurement of the first reference signal of the first beam based on the measurement configuration information of the first beam or measurement of the second reference signal of the second beam based on the measurement configuration information of the second beam.

The measurement trigger information includes a first preset threshold; and
the first preset threshold is used to instruct: when signal strength of the first reference signal that is of the first beam and that is received by the first UE is less than the first preset threshold, to measure the second reference signal of the second beam.

The measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

The apparatus in this embodiment may be configured to correspondingly perform the technical solution of the method embodiment shown in FIG. 4, their implementation principles and technical effects are similar, and details are not described herein again.

In FIG. 7, the sending module 602 is specifically configured to: scramble the measurement configuration information or activation information of the measurement configuration information by using a first RNTI, and send the scrambled measurement configuration information or the scrambled activation information of the measurement configuration information.

The first RNTI is a measurement configuration detection RNTI or a measurement configuration activation RNTI of the reference signal.

The first RNTI is used to scramble the measurement configuration information or the activation information of the measurement configuration information for a group of UEs having common information.

The receiving module 603 is specifically configured to receive second information sent by at least one second UE, where the second information includes: indication information of a service type of the second UE, indication information of a detection type, and/or indication information of a UE capability;
the processing module 601 is specifically configured to determine, based on the second information and the first information, that the second UE and the first UE have common information; and
the sending module is specifically configured to send, to the first UE and the second UE, the measurement configuration information that is scrambled by using the first RNTI.

The measurement configuration information is configured by using higher layer signaling, Media Access Control MAC signaling, or physical layer signaling, and configuring by using the physical layer signaling may be preconfiguring and activating a corresponding configuration feature by using a PDCCH command.

The apparatus in this embodiment may be configured to correspondingly perform the technical solution of the method embodiment shown in FIG. 4, their implementation principles and technical effects are similar, and details are not described herein again.

FIG. 8 is a schematic structural diagram of Embodiment 2 of a measurement configuration apparatus according to the present invention. The apparatus in this embodiment is deployed in a second network device, and the apparatus in this embodiment includes a processing module 701 and a sending module 702. The processing module 701 is configured to determine measurement configuration information of a second beam; and the sending module 702 is configured to send the measurement configuration information of the second beam to a first network device, where
the measurement configuration information of the second beam is measurement configuration information of a second reference signal sent in the second beam; and
the measurement configuration information includes at least one of the following:
a time domain resource occupied by the second reference signal, where the time domain resource is an orthogonal frequency division multiplexing OFDM symbol quantity, a mini-subframe quantity, a subframe quantity, or a timeslot quantity;
sending duration or a sending window of the second reference signal;
a sending period of the second reference signal;
a distribution density or a distribution mode of the second reference signal;
a frequency domain offset of the second reference signal;
a beam identifier corresponding to a first beam and/or the second beam and/or a cell identifier corresponding to a network device; and
a sequence identifier of the reference signal.

Further, the apparatus further includes:
a receiving module 703, configured to receive first information sent by the first network device, where the first information includes at least one of the following:
   indication information of a service type of the first UE;
   indication information of a detection type; and
   indication information of a UE capability; and
the determining, by a second network device, measurement configuration information of a second beam includes:
   determining, by the second network device, the measurement configuration information of the second beam based on the first information.

FIG. 9 is a schematic structural diagram of Embodiment 3 of a measurement configuration apparatus according to the present invention. The apparatus in this embodiment is deployed in first UE, and the apparatus in this embodiment includes a receiving module 801 and a processing module 802. The receiving module 801 is configured to receive measurement configuration information of a first beam and/or a second beam that is sent by a first network device; and
the processing module 802 is configured to measure a first reference signal and/or a second reference signal based on the measurement configuration information, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

The reference signal is a reference signal based on beamforming.

The beam identifier is a beam pair identifier, and the beam pair includes a transmit beam identifier of the network device and a receive beam identifier of the user equipment.

Further, the apparatus further includes:
a sending module 803, configured to send first information to the first network device, where the first information includes at least one of the following:
indication information of a service type of the first UE;
indication information of a detection type; and
indication information of a UE capability.

The first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

The cell identifier is a physical cell identifier, a virtual cell identifier, or a combination of a virtual cell identifier and a relative identifier of the network device in the virtual cell.

The second beam is an adjacent beam of the first beam;
the second beam is another beam of the network device to which the first beam belongs; or
the second beam is a beam of a network device adjacent to the network device to which the first beam belongs.

The reference signal is an aperiodic reference signal.

The second beam is one or more beams that are selected by the first network device and that belong to the first network device or a network device adjacent to the first network device.

The second beam is one or more beams that are selected by the first network device based on the first information and that belong to the first network device or a network device adjacent to the first network device.

The UE capability is used to indicate at least one of a beam quantity supported by the first UE, an angle covered by a beam of the first UE, a beam width of the first UE, and whether the first UE supports a plurality of links.

The indication information of the service type is a type identifier ID corresponding to the service type; and
the detection type indication is a destination ID corresponding to the detection type.

The indication information of the detection type is used to indicate that the detection type is radio resource management RRM measurement or channel state information CSI measurement.

A service type of the first UE is any one of the following:
a mobile broadband service xMBB;
a machine type communication service mMTC; and
an ultra-reliable and low latency service URLL.

The apparatus in this embodiment may be configured to correspondingly perform the technical solution of the method embodiment shown in FIG. 2, their implementation principles and technical effects are similar, and details are not described herein again.

In FIG. 8, the receiving module 801 is further configured to receive measurement trigger information sent by the first network device; and
the processing module 802 is specifically configured to: under trigger of the measurement trigger information, measure the first reference signal of the first beam based on the measurement configuration information of the first beam; or measure the second reference signal of the second beam based on the measurement configuration information of the second beam.

The measurement trigger information includes a first preset threshold; and
the first preset threshold is used to instruct: when signal strength of the first reference signal that is of the first beam and that is received by the first UE is less than the first preset threshold, to measure the second reference signal of the second beam.

The measurement trigger information further includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

The apparatus in this embodiment may be configured to correspondingly perform the technical solution of the method embodiment shown in FIG. 4, their implementation principles and technical effects are similar, and details are not described herein again.

In FIG. 8, the receiving module 801 is further configured to receive a first RNTI sent by the first network device; and
the receiving module 801 is specifically configured to descramble the measurement configuration information of the first beam and/or the second beam or activation information of the measurement configuration information by using the first RNTI.

The first RNTI is a measurement configuration detection RNTI or a measurement configuration activation RNTI of the reference signal.

The first RNTI is used to scramble the measurement configuration information or the activation information of the measurement configuration information for a group of UEs having common information.

The measurement configuration information is configured by using higher layer signaling, Media Access Control MAC signaling, or physical layer signaling, and configuring by using the physical layer signaling may be preconfiguring and activating a corresponding configuration feature by using a PDCCH command.

The apparatus in this embodiment may be configured to correspondingly perform the technical solution of the method embodiment shown in FIG. 5, their implementation principles and technical effects are similar, and details are not described herein again.

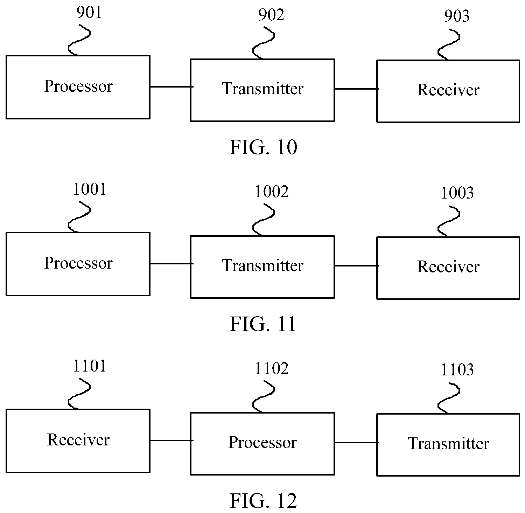

FIG. 10 is a schematic structural diagram of Embodiment 4 of a measurement configuration apparatus according to the present invention. The apparatus in this embodiment is deployed in a first network device, and the apparatus includes a processor 901 and a transmitter 902, where
the processor 901 is configured to determine measurement configuration information of a first beam and/or a second beam; and
the transmitter 902 is configured to send the measurement configuration information of the first beam and/or the second beam to first UE, where
the measurement configuration information of the first beam is measurement configuration information of a first reference signal sent in the first beam, and the measurement configuration information of the second beam is measurement configuration information of a second reference signal sent in the second beam; and
the measurement configuration information includes at least one of the following:
a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

The reference signal is a reference signal based on beamforming.

The beam identifier is a beam pair identifier, and the beam pair includes a transmit beam identifier of the network device and a receive beam identifier of the user equipment.

Further, the apparatus further includes:
a receiver 903, configured to receive first information sent by the first UE, where the first information includes at least one of the following: indication information of a service type of the first UE, indication information of a detection type, and indication information of a UE capability; and
the processor 901 is specifically configured to determine the measurement configuration information of the first beam and/or the second beam based on the first information.

The first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

The cell identifier is a physical cell identifier, a virtual cell identifier, or a combination of a virtual cell identifier and a relative identifier of the network device in the virtual cell.

The second beam is an adjacent beam of the first beam;
the second beam is another beam of the network device to which the first beam belongs; or
the second beam is a beam of a network device adjacent to the network device to which the first beam belongs.

The reference signal is an aperiodic reference signal.

The second beam is one or more beams that are selected by the first network device and that belong to the first network device or a network device adjacent to the first network device.

The second beam is one or more beams that are selected by the first network device based on the first information and that belong to the first network device or a network device adjacent to the first network device.

The UE capability is used to indicate at least one of a beam quantity supported by the first UE, an angle covered by a beam of the first UE, a beam width of the first UE, and whether the first UE supports a plurality of links.

The indication information of the service type is a type identifier ID corresponding to the service type; and
the detection type indication is a destination ID corresponding to the detection type.

The indication information of the detection type is used to indicate that the detection type is radio resource management RRM measurement or channel state information CSI measurement.

A service type of the first UE is any one of the following:
a mobile broadband service xMBB;
a machine type communication service mMTC; and
an ultra-reliable and low latency service URLL.

The apparatus in this embodiment may be configured to correspondingly perform the technical solution of the method embodiment shown in FIG. 2, their implementation principles and technical effects are similar, and details are not described herein again.

In FIG. 10, the processor 901 is specifically configured to: control the sending module to send the first information to a second network device, and control the receiving module to receive the measurement configuration information that is of the second beam belonging to the second network device and that is sent by the second network device.

The processor 901 is further configured to determine, based on the first information, the measurement configuration information of the first beam and the second beam that belongs to the first network device.

The apparatus in this embodiment may be configured to correspondingly perform the technical solution of the method embodiment shown in FIG. 3, their implementation principles and technical effects are similar, and details are not described herein again.

In FIG. 10, the transmitter 902 is further configured to send measurement trigger information to the first UE, where the measurement trigger information is used to trigger measurement of the first reference signal of the first beam based on the measurement configuration information of the first beam or measurement of the second reference signal of the second beam based on the measurement configuration information of the second beam.

The measurement trigger information includes a first preset threshold; and
the first preset threshold is used to instruct: when signal strength of the first reference signal that is of the first beam and that is received by the first UE is less than the first preset threshold, to measure the second reference signal of the second beam.

The measurement trigger information includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

The apparatus in this embodiment may be configured to correspondingly perform the technical solution of the method embodiment shown in FIG. 4, their implementation principles and technical effects are similar, and details are not described herein again.

In FIG. 10, the transmitter 902 is specifically configured to: scramble the measurement configuration information or activation information of the measurement configuration information by using a first RNTI, and send the scrambled measurement configuration information or the scrambled activation information of the measurement configuration information.

The first RNTI is a measurement configuration detection RNTI or a measurement configuration activation RNTI of the reference signal.

The first RNTI is used to scramble the measurement configuration information or the activation information of the measurement configuration information for a group of UEs having common information.

The receiver 903 is specifically configured to receive second information sent by at least one second UE, where the second information includes: indication information of a service type of the second UE, indication information of a detection type, and/or indication information of a UE capability;
the processor 901 is specifically configured to determine, based on the second information and the first information, that the second UE and the first UE have common information; and
the sending module is specifically configured to send, to the first UE and the second UE, the measurement configuration information or the activation information of the measurement configuration information that is scrambled by using the first RNTI.

The measurement configuration information is configured by using higher layer signaling, Media Access Control MAC signaling, or physical layer signaling, and configuring by using the physical layer signaling may be preconfiguring and activating a corresponding configuration feature by using a PDCCH command.

The apparatus in this embodiment may be configured to correspondingly perform the technical solution of the method embodiment shown in FIG. 4, their implementation principles and technical effects are similar, and details are not described herein again.

FIG. 11 is a schematic structural diagram of Embodiment 5 of a measurement configuration apparatus according to the present invention. The apparatus in this embodiment is deployed in a second network device, and the apparatus in this embodiment includes a processor 1001 and a transmitter 1002. The processor 1001 is configured to determine measurement configuration information of a second beam; and the transmitter 1002 is configured to send the measurement configuration information of the second beam to a first network device, where
the measurement configuration information of the second beam is measurement configuration information of a second reference signal sent in the second beam; and
the measurement configuration information includes at least one of the following:
a time domain resource occupied by the second reference signal, where the time domain resource is an orthogonal frequency division multiplexing OFDM symbol quantity, a mini-subframe quantity, a subframe quantity, or a timeslot quantity;
sending duration or a sending window of the second reference signal;
a sending period of the second reference signal;
a distribution density or a distribution mode of the second reference signal;
a frequency domain offset of the second reference signal;
a beam identifier corresponding to a first beam and/or the second beam and/or a cell identifier corresponding to a network device; and
a sequence identifier of the reference signal.

Further, the apparatus further includes:
a receiver 1003, configured to receive first information sent by the first network device, where the first information includes at least one of the following:
indication information of a service type of the first UE;
indication information of a detection type; and
indication information of a UE capability; and
the determining, by a second network device, measurement configuration information of a second beam includes:
   determining, by the second network device, the measurement configuration information of the second beam based on the first information.

FIG. 12 is a schematic structural diagram of Embodiment 6 of a measurement configuration apparatus according to the present invention. The apparatus in this embodiment is deployed in first UE, and the apparatus in this embodiment includes a receiver 1101 and a processor 1102. The receiver 1101 is configured to receive measurement configuration information of a first beam and/or a second beam that is sent by a first network device; and
the processor 1102 is configured to measure a first reference signal and/or a second reference signal based on the measurement configuration information, where
the measurement configuration information of the first beam is measurement configuration information of a first reference signal sent in the first beam, and the measurement configuration information of the second beam is measurement configuration information of a second reference signal sent in the second beam; and

The measurement configuration information includes at least one of the following:
a time domain resource occupied by a reference signal, where the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

The beam identifier is a beam pair identifier, and the beam pair includes a transmit beam identifier of the network device and a receive beam identifier of the user equipment.

The reference signal is a reference signal based on beamforming.

Further, the apparatus further includes:
a transmitter 1103, configured to send first information to the first network device, where the first information includes at least one of the following:
indication information of a service type of the first UE;
indication information of a detection type; and
indication information of a UE capability.

The first network device is at least one of the following: a first base station, a first transmission point TRP, and a base station to which a first cell belongs or a transmission point TRP to which a first cell belongs; and
the first cell is a physical cell or a virtual cell, and the virtual cell may include one or more TRPs.

The cell identifier is a physical cell identifier, a virtual cell identifier, or a combination of a virtual cell identifier and a relative identifier of the network device in the virtual cell.

The second beam is an adjacent beam of the first beam;
the second beam is another beam of the network device to which the first beam belongs; or
the second beam is a beam of a network device adjacent to the network device to which the first beam belongs.

The reference signal is an aperiodic reference signal.

The second beam is one or more beams that are selected by the first network device and that belong to the first network device or a network device adjacent to the first network device.

The second beam is one or more beams that are selected by the first network device based on the first information and that belong to the first network device or a network device adjacent to the first network device.

The UE capability is used to indicate at least one of a beam quantity supported by the first UE, an angle covered by a beam of the first UE, a beam width of the first UE, and whether the first UE supports a plurality of links.

The indication information of the service type is a type identifier ID corresponding to the service type; and
the detection type indication is a destination ID corresponding to the detection type.

The indication information of the detection type is used to indicate that the detection type is radio resource management RRM measurement or channel state information CSI measurement.

A service type of the first UE is any one of the following:
a mobile broadband service xMBB;
a machine type communication service mMTC; and
an ultra-reliable and low latency service URLL.

The apparatus in this embodiment may be configured to correspondingly perform the technical solution of the method embodiment shown in FIG. 2, their implementation principles and technical effects are similar, and details are not described herein again.

In FIG. 12, the receiver 1101 is further configured to receive measurement trigger information sent by the first network device; and
the processor 1102 is specifically configured to: under trigger of the measurement trigger information, measure the first reference signal of the first beam based on the measurement configuration information of the first beam; or measure the second reference signal of the second beam based on the measurement configuration information of the second beam.

The measurement trigger information includes a first preset threshold; and
the first preset threshold is used to instruct: when signal strength of the first reference signal that is of the first beam and that is received by the first UE is less than the first preset threshold, to measure the second reference signal of the second beam.

The measurement trigger information further includes a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

The apparatus in this embodiment may be configured to correspondingly perform the technical solution of the method embodiment shown in FIG. 4, their implementation principles and technical effects are similar, and details are not described herein again.

In FIG. 12, the receiver 1101 is further configured to receive a first RNTI sent by the first network device; and
the receiver 1101 is specifically configured to descramble the measurement configuration information of the first beam and/or the second beam or activation information of the measurement configuration information by using the first RNTI.

The first RNTI is a measurement configuration detection RNTI or a measurement configuration activation RNTI of the reference signal.

The first RNTI is used to scramble the measurement configuration information or the activation information of the measurement configuration information for a group of UEs having common information.

The measurement configuration information is configured by using higher layer signaling, Media Access Control MAC signaling, or physical layer signaling, and configuring by using the physical layer signaling may be preconfiguring and activating a corresponding configuration feature by using a PDCCH command.

The apparatus in this embodiment may be configured to correspondingly perform the technical solution of the method embodiment shown in FIG. 5, their implementation principles and technical effects are similar, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A measurement configuration method, comprising:
determining, by a first network device, measurement configuration information of a first beam and/or a second beam; and
sending, by the first network device, the measurement configuration information of the first beam and/or the second beam to first UE, wherein
the measurement configuration information of the first beam is measurement configuration information of a first reference signal sent in the first beam, and the measurement configuration information of the second beam is measurement configuration information of a second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

2. The method according to claim 1, wherein the reference signal is a reference signal based on beamforming.

3. The method according to claim 1, wherein the beam identifier is a beam pair identifier, and the beam pair comprises a transmit beam identifier of the network device and a receive beam identifier of the user equipment.

4. The method according to any one of claims 1 to 3, before the determining, by a first network device, measurement configuration information of a first beam and/or a second beam, further comprising:
receiving, by the first network device, first information sent by the first UE, wherein the first information comprises at least one of the following: indication information of a service type of the first UE, indication information of a detection type, and indication information of a UE capability; and
the determining, by a first network device, measurement configuration information of a first beam and/or a second beam comprises:
determining, by the first network device, the measurement configuration information of the first beam and/or the second beam based on the first information.

5. The method according to any one of claims 1 to 4, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

6. The method according to any one of claims 1 to 5, wherein the cell identifier is a physical cell identifier, a virtual cell identifier, or a combination of a virtual cell identifier and a relative identifier of the network device in the virtual cell.

7. The method according to any one of claims 1 to 5, wherein
the second beam is an adjacent beam of the first beam;
the second beam is another beam of the network device to which the first beam belongs; or
the second beam is a beam of a network device adjacent to the network device to which the first beam belongs.

8. The method according to any one of claims 1 to 6, wherein
the reference signal is an aperiodic reference signal.

9. The method according to claim 6, wherein
the second beam is one or more beams that are selected by the first network device and that belong to the first network device or a network device adjacent to the first network device.

10. The method according to claim 4, wherein the second beam is one or more beams that are selected by the first network device based on the first information and that belong to the first network device or a network device adjacent to the first network device.

11. The method according to claim 4, wherein the determining, by a first network device, measurement configuration information of a first beam and/or a second beam based on the first information comprises:
sending, by the first network device, the first information to a second network device; and
receiving, by the first network device, the measurement configuration information that is of the second beam belonging to the second network device and that is sent by the second network device.

12. The method according to claim 11, further comprising:
determining, by the first network device based on the first information, the measurement configuration information of the first beam and the second beam that belongs to the first network device.

13. The method according to claim 4, wherein
the UE capability is used to indicate at least one of a beam quantity supported by the first UE, an angle covered by a beam of the first UE, a beam width of the first UE, and whether the first UE supports a plurality of links.

14. The method according to claim 13, wherein the indication information of the service type is a type identifier ID corresponding to the service type; and
the detection type indication is a destination ID corresponding to the detection type.

15. The method according to claim 4 or 14, wherein the indication information of the detection type is used to indicate that the detection type is radio resource management RRM measurement or channel state information CSI measurement.

16. The method according to claim 4 or 15, wherein a service type of the first UE is any one of the following:
a mobile broadband service xMBB;
a machine type communication service mMTC; and
an ultra-reliable and low latency service URLL.

17. The method according to any one of claims 1 to 16, further comprising:
sending, by the first network device, measurement trigger information to the first UE, wherein the measurement trigger information is used to trigger measurement of the first reference signal of the first beam based on the measurement configuration information of the first beam or measurement of the second reference signal of the second beam based on the measurement configuration information of the second beam.

18. The method according to claim 17, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

19. The method according to claim 17, wherein the measurement trigger information comprises a second preset threshold; and the second preset threshold is used to instruct, when signal strength of the first reference signal that is of the first beam and that is received by the first UE is less than the second preset threshold, to measure the second reference signal of the second beam belonging to a same network device as the first beam.

20. The method according to any one of claims 1 to 19, wherein the sending, by the first network device, the measurement configuration information of the first beam and/or the second beam to first UE comprises:
scrambling, by the first network device, the measurement configuration information or activation information of the measurement configuration information by using a first RNTI; and
sending, by the first network device, the scrambled measurement configuration information or the scrambled activation information of the measurement configuration information.

21. The method according to claim 20, wherein
the first RNTI is a measurement configuration detection RNTI or a measurement configuration activation RNTI of the reference signal.

22. The method according to claim 20, wherein
the first RNTI is used to scramble the measurement configuration information or the activation information of the measurement configuration information for a group of UEs having common information.

23. The method according to any one of claims 20 to 22, further comprising:
receiving, by the first network device, second information sent by at least one second UE, wherein the second information comprises: indication information of a service type of the second UE, indication information of a detection type, and/or indication information of a UE capability; and
determining, by the first network device based on the second information and the first information, that the second UE and the first UE have common information; and
the sending, by the first network device, the scrambled measurement configuration information comprises:
sending, by the first network device to the first UE and the second UE, the measurement configuration information or the activation information of the measurement configuration information that is scrambled by using the first RNTI.

24. The method according to any one of claims 1 to 23, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.

25. A measurement configuration method, comprising:
determining, by a second network device, measurement configuration information of a second beam; and
sending, by the second network device, the measurement configuration information of the second beam to a first network device, wherein
the measurement configuration information of the second beam is measurement configuration information of a second reference signal sent in the second beam; and
the measurement configuration information comprises at least one of the following:
a time domain resource occupied by the second reference signal, wherein the time domain resource is an orthogonal frequency division multiplexing OFDM symbol quantity, a mini-subframe quantity, a subframe quantity, or a timeslot quantity;
sending duration or a sending window of the second reference signal;
a sending period of the second reference signal;
a distribution density or a distribution mode of the second reference signal;
a frequency domain offset of the second reference signal;
a beam identifier corresponding to the first beam and/or the second beam and/or a cell identifier corresponding to a network device; and
a sequence identifier of the reference signal.

26. The method according to claim 25, further comprising:
receiving, by the second network device, first information sent by the first network device, wherein the first information comprises at least one of the following:
indication information of a service type of the first UE;
indication information of a detection type; and
indication information of a UE capability; and
the determining, by a second network device, measurement configuration information of a second beam comprises:
determining, by the second network device, the measurement configuration information of the second beam based on the first information.

27. A measurement configuration method, comprising:
receiving, by first user equipment UE, measurement configuration information of a first beam and/or a second beam that is sent by a first network device; and
measuring, by the first UE, a first reference signal and/or a second reference signal based on the measurement configuration information, wherein
the measurement configuration information of the first beam is measurement configuration information of the first reference signal sent in the first beam, and the measurement configuration information of the second beam is measurement configuration information of the second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

28. The method according to claim 27, wherein the reference signal is a reference signal based on beamforming.

29. The method according to claim 27, wherein the beam identifier is a beam pair identifier, and the beam pair comprises a transmit beam identifier of the network device and a receive beam identifier of the user equipment.

30. The method according to any one of claims 27 to 29, before the receiving, by first user equipment UE, measurement configuration information of a first beam and/or a second beam that is sent by a first network device, further comprising:
sending, by the first UE, first information to the first network device, wherein the first information comprises at least one of the following:
indication information of a service type of the first UE;
indication information of a detection type; and
indication information of a UE capability.

31. The method according to any one of claims 27 to 30, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

32. The method according to any one of claims 27 to 31, wherein the cell identifier is a physical cell identifier, a virtual cell identifier, or a combination of a virtual cell identifier and a relative identifier of the network device in the virtual cell.

33. The method according to any one of claims 27 to 31, wherein
the second beam is an adjacent beam of the first beam;
the second beam is another beam of the network device to which the first beam belongs; or
the second beam is a beam of a network device adjacent to the network device to which the first beam belongs.

34. The method according to any one of claims 27 to 33, wherein
the reference signal is an aperiodic reference signal.

35. The method according to any one of claims 27 to 34, wherein
the second beam is one or more beams that are selected by the first network device and that belong to the first network device or a network device adjacent to the first network device.

36. The method according to any one of claims 27 to 34, wherein the second beam is one or more beams that are selected by the first network device based on the first information and that belong to the first network device or a network device adjacent to the first network device.

37. The method according to claim 30, wherein
the UE capability is used to indicate at least one of a beam quantity supported by the first UE, an angle covered by a beam of the first UE, a beam width of the first UE, and whether the first UE supports a plurality of links.

38. The method according to claim 37, wherein the indication information of the service type is a type identifier ID corresponding to the service type; and
the detection type indication is a destination ID corresponding to the detection type.

39. The method according to claim 30, wherein the indication information of the detection type is used to indicate that the detection type is radio resource management RRM measurement or channel state information CSI measurement.

40. The method according to claim 30, wherein a service type of the first UE is any one of the following:
a mobile broadband service xMBB;
a machine type communication service mMTC; and
an ultra-reliable and low latency service URLL.

41. The method according to any one of claims 27 to 40, further comprising:
receiving, by the first UE, measurement trigger information sent by the first network device; and
the measuring, by the first UE, a first reference signal and/or a second reference signal based on the measurement configuration information comprises:
under trigger of the measurement trigger information, measuring, by the first UE, the first reference signal of the first beam based on the measurement configuration information of the first beam; or measuring the second reference signal of the second beam based on the measurement configuration information of the second beam.

42. The method according to claim 41, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

43. The method according to claim 41, wherein the measurement trigger information comprises a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

44. The method according to any one of claims 28 to 43, further comprising:
receiving, by the first UE, a first RNTI sent by the first network device; and
the receiving, by first user equipment UE, measurement configuration information of a first beam and/or a second beam that is sent by a first network device comprises:
descrambling, by the first UE, the measurement configuration information of the first beam and/or the second beam or activation information of the measurement configuration information by using the first RNTI.

45. The method according to claim 44, wherein
the first RNTI is a measurement configuration detection RNTI or a measurement configuration activation RNTI of the reference signal.

46. The method according to claim 44, wherein
the first RNTI is used to scramble the measurement configuration information or the activation information of the measurement configuration information for a group of UEs having common information.

47. The method according to any one of claims 28 to 46, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.

48. A measurement configuration apparatus, comprising:
a processing module, configured to determine measurement configuration information of a first beam and/or a second beam; and
a sending module, configured to send the measurement configuration information of the first beam and/or the second beam to first UE, wherein
the measurement configuration information of the first beam is measurement configuration information of a first reference signal sent in the first beam, and the measurement configuration information of the second beam is measurement configuration information of a second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

49. The apparatus according to claim 48, wherein the reference signal is a reference signal based on beamforming.

50. The apparatus according to claim 48, wherein the beam identifier is a beam pair identifier, and the beam pair comprises a transmit beam identifier of the network device and a receive beam identifier of the user equipment.

51. The apparatus according to claim 48 or 49, further comprising:
a receiving module, configured to receive first information sent by the first UE, wherein the first information comprises at least one of the following: indication information of a service type of the first UE, indication information of a detection type, and indication information of a UE capability; and
the processing module is specifically configured to determine the measurement configuration information of the first beam and/or the second beam based on the first information.

52. The apparatus according to any one of claims 48 to 51, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

53. The apparatus according to any one of claims 48 to 52, wherein the cell identifier is a physical cell identifier, a virtual cell identifier, or a combination of a virtual cell identifier and a relative identifier of the network device in the virtual cell.

54. The apparatus according to any one of claims 48 to 52, wherein
the second beam is an adjacent beam of the first beam;
the second beam is another beam of the network device to which the first beam belongs; or
the second beam is a beam of a network device adjacent to the network device to which the first beam belongs.

55. The apparatus according to any one of claims 48 to 52, wherein
the reference signal is an aperiodic reference signal.

56. The apparatus according to claim 54, wherein
the second beam is one or more beams that are selected by the first network device and that belong to the first network device or a network device adjacent to the first network device.

57. The apparatus according to claim 51, wherein the second beam is one or more beams that are selected by the first network device based on the first information and that belong to the first network device or a network device adjacent to the first network device.

58. The apparatus according to claim 51, wherein the processing module is specifically configured to: control the sending module to send the first information to a second network device, and control the receiving module to receive the measurement configuration information that is of the second beam belonging to the second network device and that is sent by the second network device.

59. The apparatus according to claim 58, wherein the processing module is further configured to determine, based on the first information, the measurement configuration information of the first beam and the second beam that belongs to the first network device.

60. The apparatus according to claim 51, wherein
the UE capability is used to indicate at least one of a beam quantity supported by the first UE, an angle covered by a beam of the first UE, a beam width of the first UE, and whether the first UE supports a plurality of links.

61. The apparatus according to claim 60, wherein the indication information of the service type is a type identifier ID corresponding to the service type; and
the detection type indication is a destination ID corresponding to the detection type.

62. The apparatus according to claim 51 or 61, wherein the indication information of the detection type is used to indicate that the detection type is radio resource management RRM measurement or channel state information CSI measurement.

63. The apparatus according to claim 51 or 62, wherein a service type of the first UE is any one of the following:
a mobile broadband service xMBB;
a machine type communication service mMTC; and
an ultra-reliable and low latency service URLL.

64. The apparatus according to any one of claims 48 to 63, wherein the sending module is further configured to send measurement trigger information to the first UE, wherein the measurement trigger information is used to trigger measurement of the first reference signal of the first beam based on the measurement configuration information of the first beam or measurement of the second reference signal of the second beam based on the measurement configuration information of the second beam.

65. The apparatus according to claim 64, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

66. The apparatus according to claim 64, wherein the measurement trigger information comprises a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

67. The apparatus according to any one of claims 48 to 66, wherein the sending module is specifically configured to: scramble the measurement configuration information or activation information of the measurement configuration information by using a first RNTI, and send the scrambled measurement configuration information or the scrambled activation information of the measurement configuration information.

68. The apparatus according to claim 67, wherein
the first RNTI is a measurement configuration detection RNTI or a measurement configuration activation RNTI of the reference signal.

69. The apparatus according to claim 67, wherein
the first RNTI is used to scramble the measurement configuration information or the activation information of the measurement configuration information for a group of UEs having common information.

70. The apparatus according to any one of claims 67to 69, wherein the receiving module is specifically configured to receive second information sent by at least one second UE, wherein the second information comprises: indication information of a service type of the second UE, indication information of a detection type, and/or indication information of a UE capability;
the processing module is specifically configured to determine, based on the second information and the first information, that the second UE and the first UE have common information; and
the sending module is specifically configured to send, to the first UE and the second UE, the measurement configuration information or the activation information of the measurement configuration information that is scrambled by using the first RNTI.

71. The apparatus according to any one of claims 48 to 70, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.

72. A measurement configuration apparatus, comprising:
a processing module, configured to determine measurement configuration information of a second beam; and
a sending module, configured to send the measurement configuration information of the second beam to a first network device, wherein
the measurement configuration information of the second beam is measurement configuration information of a second reference signal sent in the second beam; and
the measurement configuration information comprises at least one of the following:
a time domain resource occupied by the second reference signal, wherein the time domain resource is an orthogonal frequency division multiplexing OFDM symbol quantity, a mini-subframe quantity, a subframe quantity, or a timeslot quantity;
sending duration or a sending window of the second reference signal;
a sending period of the second reference signal;
a distribution density or a distribution mode of the second reference signal;
a frequency domain offset of the second reference signal;
a beam identifier corresponding to the first beam and/or the second beam and/or a cell identifier corresponding to a network device; and
a sequence identifier of the reference signal.

73. The apparatus according to claim 72, further comprising:
a receiving module, configured to receive first information sent by the first network device, wherein the first information comprises at least one of the following:
indication information of a service type of the first UE;
indication information of a detection type; and
indication information of a UE capability; and
the determining, by a second network device, measurement configuration information of a second beam comprises:
determining, by the second network device, the measurement configuration information of the second beam based on the first information.

74. A measurement configuration apparatus, comprising:
a receiving module, configured to receive measurement configuration information of a first beam and/or a second beam that is sent by a first network device; and
a processing module, configured to measure a first reference signal and/or a second reference signal based on the measurement configuration information, wherein
the measurement configuration information of the first beam is measurement configuration information of the first reference signal sent in the first beam, and the measurement configuration information of the second beam is measurement configuration information of the second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

75. The apparatus according to claim 74, wherein the reference signal is a reference signal based on beamforming.

76. The apparatus according to claim 74, wherein the beam identifier is a beam pair identifier, and the beam pair comprises a transmit beam identifier of the network device and a receive beam identifier of the user equipment.

77. The apparatus according to claim 74 or 75, further comprising:
a sending module, configured to send first information to the first network device, wherein the first information comprises at least one of the following:
indication information of a service type of the first UE;
indication information of a detection type; and
indication information of a UE capability.

78. The apparatus according to any one of claims 74 to 77, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

79. The apparatus according to any one of claims 74 to 78, wherein the cell identifier is a physical cell identifier, a virtual cell identifier, or a combination of a virtual cell identifier and a relative identifier of the network device in the virtual cell.

80. The apparatus according to any one of claims 74 to 78, wherein
the second beam is an adjacent beam of the first beam;
the second beam is another beam of the network device to which the first beam belongs; or
the second beam is a beam of a network device adjacent to the network device to which the first beam belongs.

81. The apparatus according to any one of claims 74 to 80, wherein
the reference signal is an aperiodic reference signal.

82. The apparatus according to any one of claims 74 to 81, wherein
the second beam is one or more beams that are selected by the first network device and that belong to the first network device or a network device adjacent to the first network device.

83. The apparatus according to any one of claims 74 to 81, wherein the second beam is one or more beams that are selected by the first network device based on the first information and that belong to the first network device or a network device adjacent to the first network device.

84. The apparatus according to claim 77, wherein
the UE capability is used to indicate at least one of a beam quantity supported by the first UE, an angle covered by a beam of the first UE, a beam width of the first UE, and whether the first UE supports a plurality of links.

85. The apparatus according to claim 84, wherein the indication information of the service type is a type identifier ID corresponding to the service type; and
the detection type indication is a destination ID corresponding to the detection type.

86. The apparatus according to claim 77, wherein the indication information of the detection type is used to indicate that the detection type is radio resource management RRM measurement or channel state information CSI measurement.

87. The apparatus according to claim 77, wherein a service type of the first UE is any one of the following:
a mobile broadband service xMBB;
a machine type communication service mMTC; and
an ultra-reliable and low latency service URLL.

88. The apparatus according to any one of claims 74 to 87, wherein the receiving module is further configured to receive measurement trigger information sent by the first network device; and
the processing module is specifically configured to: under trigger of the measurement trigger information, measure the first reference signal of the first beam based on the measurement configuration information of the first beam; or measure the second reference signal of the second beam based on the measurement configuration information of the second beam.

89. The apparatus according to claim 88, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

90. The apparatus according to claim 88, wherein the measurement trigger information comprises a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

91. The apparatus according to claims 74 to 90, wherein the receiving module is further configured to receive a first RNTI sent by the first network device; and
the receiving module is specifically configured to descramble the measurement configuration information of the first beam and/or the second beam or activation information of the measurement configuration information by using the first RNTI.

92. The apparatus according to claim 91, wherein
the first RNTI is a measurement configuration detection RNTI or a measurement configuration activation RNTI of the reference signal.

93. The apparatus according to claim 91, wherein
the first RNTI is used to scramble the measurement configuration information or the activation information of the measurement configuration information for a group of UEs having common information.

94. The apparatus according to any one of claims 74 to 93, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.

95. A measurement configuration apparatus, comprising:
a processor, configured to determine measurement configuration information of a first beam and/or a second beam; and
a transmitter, configured to send the measurement configuration information of the first beam and/or the second beam to first UE, wherein
the measurement configuration information of the first beam is measurement configuration information of a first reference signal sent in the first beam, and the measurement configuration information of the second beam is measurement configuration information of a second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

96. The apparatus according to claim 95, wherein the reference signal is a reference signal based on beamforming.

97. The apparatus according to claim 95, wherein the beam identifier is a beam pair identifier, and the beam pair comprises a transmit beam identifier of the network device and a receive beam identifier of the user equipment.

98. The apparatus according to claim 95 or 96, further comprising:
a receiver, configured to receive first information sent by the first UE, wherein the first information comprises at least one of the following: indication information of a service type of the first UE, indication information of a detection type, and indication information of a UE capability; and
the processor is specifically configured to determine the measurement configuration information of the first beam and/or the second beam based on the first information.

99. The apparatus according to any one of claims 95 to 98, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

100. The apparatus according to any one of claims 95 to 99, wherein the cell identifier is a physical cell identifier, a virtual cell identifier, or a combination of a virtual cell identifier and a relative identifier of the network device in the virtual cell.

101. The apparatus according to any one of claims 95 to 100, wherein
the second beam is an adjacent beam of the first beam;
the second beam is another beam of the network device to which the first beam belongs; or
the second beam is a beam of a network device adjacent to the network device to which the first beam belongs.

102. The apparatus according to any one of claims 95 to 101, wherein
the reference signal is an aperiodic reference signal.

103. The apparatus according to claim 101, wherein
the second beam is one or more beams that are selected by the first network device and that belong to the first network device or a network device adjacent to the first network device.

104. The apparatus according to claim 98, wherein the second beam is one or more beams that are selected by the first network device based on the first information and that belong to the first network device or a network device adjacent to the first network device.

105. The apparatus according to claim 98, wherein the processor is specifically configured to: control the transmitter to send the first information to a second network device, and control the receiver to receive the measurement configuration information that is of the second beam belonging to the second network device and that is sent by the second network device.

106. The apparatus according to claim 105, wherein the processor is further configured to determine, based on the first information, the measurement configuration information of the first beam and the second beam that belongs to the first network device.

107. The apparatus according to claim 98, wherein
the UE capability is used to indicate at least one of a beam quantity supported by the first UE, an angle covered by a beam of the first UE, a beam width of the first UE, and whether the first UE supports a plurality of links.

108. The apparatus according to claim 107, wherein the indication information of the service type is a type identifier ID corresponding to the service type; and
the detection type indication is a destination ID corresponding to the detection type.

109. The apparatus according to claim 98 or 108, wherein the indication information of the detection type is used to indicate that the detection type is radio resource management RRM measurement or channel state information CSI measurement.

110. The apparatus according to claim 98 or 109, wherein a service type of the first UE is any one of the following:
a mobile broadband service xMBB;
a machine type communication service mMTC; and
an ultra-reliable and low latency service URLL.

111. The apparatus according to any one of claims 95 to 110, wherein the transmitter is further configured to send measurement trigger information to the first UE, wherein the measurement trigger information is used to trigger measurement of the first reference signal of the first beam based on the measurement configuration information of the first beam or measurement of the second reference signal of the second beam based on the measurement configuration information of the second beam.

112. The apparatus according to claim 111, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

113. The apparatus according to claim 112, wherein the measurement trigger information comprises a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

114. The apparatus according to any one of claims 95 to 113, wherein the transmitter is specifically configured to: scramble the measurement configuration information or activation information of the measurement configuration information by using a first RNTI, and send the scrambled measurement configuration information or the scrambled activation information of the measurement configuration information.

115. The apparatus according to claim 114, wherein
the first RNTI is a measurement configuration detection RNTI or a measurement configuration activation RNTI of the reference signal.

116. The apparatus according to claim 114, wherein
the first RNTI is used to scramble the measurement configuration information or the activation information of the measurement configuration information for a group of UEs having common information.

117. The apparatus according to any one of claims 114 to 116, wherein the receiver is specifically configured to receive second information sent by at least one second UE, wherein the second information comprises: indication information of a service type of the second UE, indication information of a detection type, and/or indication information of a UE capability;
the processor is specifically configured to determine, based on the second information and the first information, that the second UE and the first UE have common information; and
the transmitter is specifically configured to send, to the first UE and the second UE, the measurement configuration information or the activation information of the measurement configuration information that is scrambled by using the first RNTI.

118. The apparatus according to any one of claims 95 to 117, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.

119. A measurement configuration apparatus, comprising:
a processor, configured to determine measurement configuration information of a second beam; and
a transmitter, configured to send the measurement configuration information of the second beam to a first network device, wherein
the measurement configuration information of the second beam is measurement configuration information of a second reference signal sent in the second beam; and
the measurement configuration information comprises at least one of the following:
a time domain resource occupied by the second reference signal, wherein the time domain resource is an orthogonal frequency division multiplexing OFDM symbol quantity, a mini-subframe quantity, a subframe quantity, or a timeslot quantity;
sending duration or a sending window of the second reference signal;
a sending period of the second reference signal;
a distribution density or a distribution mode of the second reference signal;
a frequency domain offset of the second reference signal;
a beam identifier corresponding to the first beam and/or the second beam and/or a cell identifier corresponding to a network device; and
a sequence identifier of the reference signal.

120. The apparatus according to claim 119, further comprising:
a receiver, configured to receive first information sent by the first network device, wherein the first information comprises at least one of the following:
indication information of a service type of the first UE;
indication information of a detection type; and
indication information of a UE capability; and
the determining, by a second network device, measurement configuration information of a second beam comprises:
determining, by the second network device, the measurement configuration information of the second beam based on the first information.

121. A measurement configuration apparatus, comprising:
a receiver, configured to receive measurement configuration information of a first beam and/or a second beam that is sent by a first network device; and
a processor, configured to measure a first reference signal and/or a second reference signal based on the measurement configuration information, wherein
the measurement configuration information of the first beam is measurement configuration information of the first reference signal sent in the first beam, and the measurement configuration information of the second beam is measurement configuration information of the second reference signal sent in the second beam; and
the measurement configuration information comprises at least one of the following:
a time domain resource occupied by a reference signal, wherein the time domain resource is an orthogonal frequency division multiplexing OFDM symbol quantity, a mini-subframe quantity, a subframe quantity, or a timeslot quantity, and the reference signal is the first reference signal and/or the second reference signal;
sending duration or a sending window of the reference signal;
a sending period of the reference signal;
a distribution density or a distribution mode of the reference signal;
a frequency domain offset of the reference signal;
a synchronous offset of a network device to which the first beam and/or the second beam belongs;
a beam identifier corresponding to the first beam and/or the second beam and/or a cell identifier corresponding to a network device; and
a sequence identifier of the reference signal.

122. The apparatus according to claim 121, wherein the reference signal is a reference signal based on beamforming.

123. The apparatus according to claim 121, wherein the beam identifier is a beam pair identifier, and the beam pair comprises a transmit beam identifier of the network device and a receive beam identifier of the user equipment.

124. The apparatus according to any one of claims 121 to 123, further comprising:
a transmitter, configured to send first information to the first network device, wherein the first information comprises at least one of the following:
indication information of a service type of the first UE;
indication information of a detection type; and
indication information of a UE capability.

125. The apparatus according to any one of claims 121 to 124, wherein the first network device is at least one of the following: a first base station, a first transmission point TRP, and a base station to which a first cell belongs or a transmission point TRP to which a first cell belongs; and
the first cell is a physical cell or a virtual cell, and the virtual cell comprises one or more TRPs.

126. The apparatus according to any one of claims 121 to 125, wherein the cell identifier is a physical cell identifier, a virtual cell identifier, or a combination of a virtual cell identifier and a relative identifier of the network device in the virtual cell.

127. The apparatus according to any one of claims 121 to 125, wherein
the second beam is an adjacent beam of the first beam;
the second beam is another beam of the network device to which the first beam belongs; or
the second beam is a beam of a network device adjacent to the network device to which the first beam belongs.

128. The apparatus according to any one of claims 121 to 127, wherein
the reference signal is an aperiodic reference signal.

129. The apparatus according to any one of claims 121 to 128, wherein
the second beam is one or more beams that are selected by the first network device and that belong to the first network device or a network device adjacent to the first network device.

130. The apparatus according to any one of claims 121 to 128, wherein the second beam is one or more beams that are selected by the first network device based on the first information and that belong to the first network device or a network device adjacent to the first network device.

131. The apparatus according to claim 124, wherein
the UE capability is used to indicate at least one of a beam quantity supported by the first UE, an angle covered by a beam of the first UE, a beam width of the first UE, and whether the first UE supports a plurality of links.

132. The apparatus according to claim 131, wherein the indication information of the service type is a type identifier ID corresponding to the service type; and
the detection type indication is a destination ID corresponding to the detection type.

133. The apparatus according to claim 124, wherein the indication information of the detection type is used to indicate that the detection type is radio resource management RRM measurement or channel state information CSI measurement.

134. The apparatus according to claim 124, wherein a service type of the first UE is any one of the following:
a mobile broadband service xMBB;
a machine type communication service mMTC; and
an ultra-reliable and low latency service URLL.

135. The apparatus according to any one of claims 121 to 134, wherein the receiver is further configured to receive measurement trigger information sent by the first network device; and
the processor is specifically configured to: under trigger of the measurement trigger information, measure the first reference signal of the first beam based on the measurement configuration information of the first beam; or measure the second reference signal of the second beam based on the measurement configuration information of the second beam.

136. The apparatus according to claim 135, wherein the measurement trigger information comprises a first preset threshold; and
the first preset threshold is used to instruct: when signal strength of the first reference signal that is of the first beam and that is received by the first UE is less than the first preset threshold, to measure the second reference signal of the second beam.

137. The apparatus according to claim 135, wherein the measurement trigger information comprises a second preset threshold; and
the second preset threshold is used to instruct, when signal strength of the first reference signal that is of the first beam and that is received by the first UE is less than the second preset threshold, to measure the second reference signal of the second beam belonging to a same network device as the first beam.

138. The apparatus according to claims 121 to 137, wherein the receiver is further configured to receive a first RNTI sent by the first network device; and
the receiver is specifically configured to descramble the measurement configuration information of the first beam and/or the second beam or activation information of the measurement configuration information by using the first RNTI.

139. The apparatus according to claim 138, wherein
the first RNTI is a measurement configuration detection RNTI or a measurement configuration activation RNTI of the reference signal.

140. The apparatus according to claim 138, wherein
the first RNTI is used to scramble the measurement configuration information or the activation information of the measurement configuration information for a group of UEs having common information.

141. The apparatus according to any one of claims 121 to 140, wherein the measurement configuration information is configured by using higher layer signaling, Media Access Control MAC signaling, or physical layer signaling, and configuring by using the physical layer signaling may be preconfiguring and activating a corresponding configuration feature by using a PDCCH command.
